(19) Europäisches Patentamt
European Patent Office
Office européen des brevets

(11) Veröffentlichungsnummer: **0 002 794**
**B1**

(12) **EUROPÄISCHE PATENTSCHRIFT**

(45) Veröffentlichungstag der Patentschrift: **30.06.82**

(21) Anmeldenummer: **78101781.9**

(22) Anmeldetag: **20.12.78**

(51) Int. Cl.³: **C 08 G 12/12,** C 08 G 12/40, C 09 D 3/52

# (54) Verfahren zur Herstellung von Weich- und Hartharzen aus Harnstoff oder dessen Derivaten, Formaldehyd und einem CH-aciden Aldehyd und deren Verwendung als Lackbindemittel.

(30) Priorität: **22.12.77 DE 2757220**

(43) Veröffentlichungstag der Anmeldung:
**11.07.79 Patentblatt 79/14**

(45) Bekanntmachung des Hinweises auf die Patenterteilung:
**30.06.82 Patentblatt 82/26**

(84) Benannte Vertragsstaaten:
**BE CH DE FR GB NL SE**

(56) Entgegenhaltungen:
**DE - A - 2 639 754**
**GB - A - 631 365**
**GB - A - 1 193 347**

(73) Patentinhaber: **BASF Aktiengesellschaft**
**Carl-Bosch-Strasse 38**
**D-6700 Ludwigshafen (DE)**

(72) Erfinder: **Petersen, Harro, Dr.**
**Kalmitstrasse 23**
**D-6710 Frankenthal (DE)**
Erfinder: **Fischer, Kurt**
**Mundenheimer Strasse 168**
**D-6700 Ludwigshafen (DE)**
Erfinder: **Klug, Hans, Dr.**
**Deidesheimer Strasse 3**
**D-6704 Mutterstadt (DE)**
Erfinder: **Trimborn, Werner, Dr.**
**Hardenburgstrasse**
**D-6703 Limburgerhof (DE)**
Erfinder: **Schmidt, Horst, Dr.**
**Kopernikusstrasse 56**
**D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 002 794 B1

Verfahren zur Herstellung von Weich- und Hartharzen aus Harnstoff oder dessen Derivaten, Formaldehyd und einem CH-aciden Aldehyd und deren Verwendung as Lackbindemittel

Die Erfindung betrifft ein Verfahren zur Herstellung von Weich- und Hartharzen aus Harnstoff, Formaldehyd und CH-aciden Aldehyden sowie deren Verwendung.

Kondensationsprodukte aus Harnstoff bzw. seinen Derivaten mit Formaldehyd und CH-aciden Aldehyden sind bereits aus der Patentliteratur bekannt. So erhält man z.B. nach DE—PS 1 272 284, die der GB—PS 1 191 710 inhaltlich entspricht, bei der Umsetzung der Komponenten in stöchiometrischen Mengenverhältnissen die Ureido-propionaldehyde der allgemeinen Formel

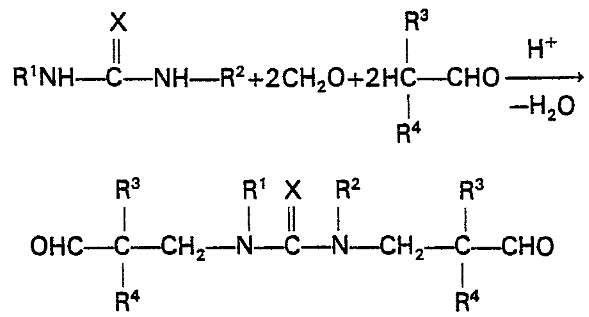

Die dabei erhaltenen Produkte sind jedoch für bestimmte Einsatzgebiete, z.B. für die Lackindustrie, nicht verwendbar. Sie spalten beim Lagern und insbesonders bei Lichteinwirkungspeziell bei Belichtung mit UV-Strahlen—Kohlenmonoxid ab. Hierbei blähen die Harze auf.

Aufgabe der vorliegenden Erfindung ist es, ein Verfahren aufzuzeigen, bei dem Kondensationsprodukte aus Harnstoff, Formaldehyd und CH-aciden Aldehyden erhalten werden, die die oben erwähnten Nachteile nicht aufweisen.

Es wurde überraschend gefunden, daß man durch eine weitere Umsetzung der Kondensationsprodukte aus Harnstoff. Formaldehyd und CH-aciden Aldehyden mit Alkoholaten—bevorzugt in Gegenwart aromatischer Kohlenwasserstoffe—eine Umwandlung zu harzartigen Produkten erhält, die keine Abspaltung von Kohlenmonoxid ergeben.

Gegenstand der vorliegenden Erfindung ist ein Verfahren zur Herstellung von Weich- und Hartharzen aus Harnstoff, Formaldehyd und CH-acidem Aldehyd, wobei man Harnstoffe der allgemeinen Formel (I) oder (II)

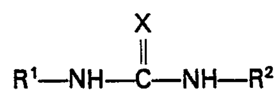

(I)

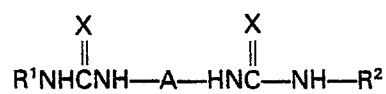

(II)

worin $R^1$ und $R^2$ Wasserstoff oder gleiche oder verschiedene Alkylreste, A einen Alkylenrest und X Sauerstoff oder Schwefel bedeuten, mit Formaldehyd und einem CH-aciden Aldehyd der allgemeinen Formel (III)

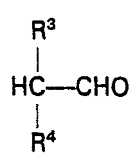

(III)

worin die Reste $R^3$ und $R^4$ gleiche oder verschiedene Alkyl-, Aryl- oder Alkylarylreste bedeuten, im Temperaturbereich zwischen 60 und 150°C in Gegenwart von Säuren, gegebenenfalls in Gegenwart von Lösungs- und/oder Verdünnungsmittel umsetzt, das dadurch gekennzeichnet ist, daß man anschließend in wasserfreiem Medium mit 2 bis 5 Gew.-% bezogen auf Festharz, eines Alkalialkoholats nachbehandelt und danach mit einer anorganischen oder organischen Säure neutralisiert, das Salz mit Wasser auswäscht und das in der organischen Lösungsmittelphase gelöste Harz vom Lösungsmittel durch Destillation befreit.

Bevorzugte Ausführungsformen des erfindungsgemäßen Verfahrens bestehen darin, daß als Basen für die Nachbehandlung Alkalialkoholate in wasserfreiem Medium verwendet werden und die Umsetzung in Gegenwart aromatischer Kohlenwasserstoffe durchgeführt wird.

Gegenstand der Erfindung ist ferner die Verwendung der erfindungsgemäß hergestellten Weich- und Hartharze in Kombination mit anderen Filmbildnern als Lackbindemittel.

Die nach dem erfindungsgemäßen Verfahren hergestellten Weich- und Hartharze spalten beim Lagern und bei Lichteinwirkung kein Kohlenmonoxid ab.

Je nach den gewählten Molverhältnissen und dem verwendeten Aldehyd werden Harze mit Erweichungspunkten zwischen 60 und 130°C erhalten.

In den mit Alkoholaten nachbehandelten Kondensationsprodukten konnten keine Aldehyd-, aber auch keine Carbonsäureester-, Alkohol- oder Carbonsäuregruppen nachgewiesen werden. Die erhaltenen Produkte weisen einen Hartharzcharakter auf und sind in Alkoholen und in einigen Fällen sogar in Testbenzin löslich.

Zu den Aufbaukomponenten der erfindungsgemäß herzustellenden Harze ist im einzelnen folgendes auszuführen.

Als Harnstoffe eignen sich solche der allgemeinen Formeln (I) und (II)

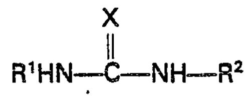
(I)

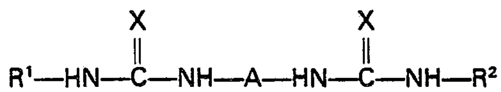
(II)

worin $R^1$ und $R^2$ Wasserstoff oder gleiche oder verschiedene Alkylreste, insbesondere solche mit 1 bis 18, vorzugsweise 1 bis 5 Kohlenstoffatomen, A einen Alkylenrest mit 1 bis 6, vorzugsweise 1 bis 3 Kohlenstoffatomen und X Sauerstoff oder Schwefel bedeuten.

Neben Harnstoff oder Thioharnstoff können auch mono- und di-substituierte Harnstoffe sowie Alkylendiharnstoffe eingesetzt werden. Bevorzugt dient jedoch Harnstoff zur Herstellung der erfindungsgemäßen Harze.

Der Formaldehyd kann als wäßrige, z.B. als 40 %ige Lösung, als Paraformaldehyd oder in Form von Trioxan, Tetroxan oder Formaldehydacetalen eingesetzt werden.

Da die Kondensation über Hydroxymethylharnstoffe verläuft, kann man anstelle der Harnstoffe und des Formaldehyds auch die entsprechenden Hydroxymethylharnstoffe einsetzen.

Als CH-acide Aldehyde der allgemeinen Formel (III)

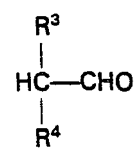

worin die Reste $R^3$ und $R^4$ gleiche oder verschiedene Alkyl-, Aryl- oder Alkylarylreste bedeuten, eignen sich solche mit 1 bis 8, vorzugsweise 1 bis 6 Kohlenstoffatome enthaltenden Alkylresten sowie solche mit 6 bis 10 Kohlenstoffatome enthaltenden Aryl- bzw. Alkylarylresten. Unter CH-aciden Aldehyden sind erfindungsgemäß solche zu verstehen, die an dem der Carbonylgruppe benachbarten Kohlenstoffatom ein Wasserstoffatom aufweisen.

Unter diesen CH-aciden Aldehyden sind insbesondere der billige Isobutyraldehyd und das 2-Äthylhexanal zu erwähnen. Als weitere Beispiele für CH-acide Aldehyde seien 2-Methylpentanal, 2-Phenylpropanal und Isovaleraldehyd genannt.

Harnstoff, Formaldehyd und CH-acider Aldehyd werden für das erfindungsgemäße Verfahren in einem Molverhältnis von 1/2/2 bis 1/4/4, vorzugsweise 1/4/4 eingesetzt. Durch Variation der Molverhältnisse lassen sich die Eigenschaften der erfindungsgemäßen Harze, insbesondere ihre Erweichungspunkte und Lösungsmittelverträglichkeiten gezielt beeinflussen. So erhält man beispielsweise mit Molverhältnissen von 1/2/2 Hartharze, während mit Molverhältnissen von 1/4/4 Produkte mit Weichharzcharakter erhalten werden.

Als Säuren eignen sich anorganische und organische Säuren, vorzugsweise Schwefelsäure und Oxalsäure.

Bei der Durchführung des erfindungsgemäßen Verfahrens können Lösungs- und/oder Verdünnungsmittel mitverwendet werden. Als Lösungsmittel haben sich besonders aromatische Kohlenwasserstoffe bewährt. Unter diesen ist besonders Xylol hervorzuheben.

Die saure Kondensation wird im Temperaturbereich zwischen 60 und 150, vorzugsweise 80 und 100°C durchgeführt, und zwar zweckmäßigerweise solange, bis vollständiger Umsatz der Komponenten erreicht ist.

Nach beendeter saurer Kondensation wird die wäßrige Phase, gegebenenfalls nach Zusatz von Lösungsmittel, vorzugsweise Xylol abgetrennt und gegebenenfalls noch vorhandenes Restwasser durch Destillation entfernt. Anschließend werden 2 bis 5 Gew.-%, bezogen auf Festharz eines Alkalialkoholats zugesetzt. Insbesondere haben sich hierbei.

Natriummethylat und Natriumäthylat bewährt. Die Behandlung mit der Base wird vorzugsweise

bei 80 bis 120°C durchgeführt und beansprucht etwa 1 bis 2 Stunden. Danach wird mit einer anorganischen oder organischen Säure neutralisiert, z.B. mit Schwefelsäure oder Phthalsäure, das Salz mit Wasser ausgewaschen und das in der organischen Lösungsmittelphase gelöste Harz vom Lösungsmittel durch Destillation befreit.

Die Herstellung der erfindungsgemäßen Harze ist diskontinuierlich und kontinuierlich möglich.

Die nach dem erfindungsgemäßen Verfahren hergestellten Weich- und Hartharze eignen sich in Kombination mit anderen üblicherweise als Lackbindemittel zu verwendenden physikalisch trocknenden Filmbildnern, wie Cellulosederivaten, z.B. Nitrocellulose, Äthylcellulose, Celluloseacetobutyrat, Chlorkautschuk, Mischpolymerisaten auf Vinylester-, Vinyläther-, Vinylchlorid-, Acrylester-, Vinylaromatenbasis, z.B. Vinylchlorid/Vinylisobutyläthercopolymerisate oder chemisch trocknenden Bindemitteln, wie Alkydharzen, trocknenden und halbtrocknenden Ölen zur Herstellung von Lacken, wobei der Gehalt dieser Lacke an erfindungsgemäß hergestelltem Harz in weiten Grenzen variieren kann, in den meisten Fällen jedoch nicht mehr als 50, vorzugsweise 2 bis 40 Gew.% des gesamten Bindemittels beträgt.

Die erfindungsgemäßen Harze können mit den in der Lacktechnik üblichen Lösungs- und Verdünnungsmitteln, wie Alkoholen, Ketonen, Äthern, Estern, wie Butylacetat, aliphatischen und aromatischen Kohlenwasserstoffen, wie Toluol, Xylol, Hexan, Testbenzin, Gemischen der vorgenannten Lösungsmittel sowie Pigmenten, Farbstoffen, Weichmachern, Verlaufshilfsmitteln und anderen Hilfsmitteln, verarbeitet werden.

Die erfindungsgemäßen Lackbindemittel eignen sich unter Anwendung üblicher Applikationsverfahren, wie Streichen, Spritzen, Gießen, zum Lackieren von Substraten, wie Holz, Spanplatten, Papier und Metall, z.B. Eisenblechen.

Sie lassen sich sehr vorteilhaft verarbeiten. Man erhält Lackierungen mit sehr guten mechanischen Eigenschaften, gutem Glanz, guter Lichtbeständigkeit und guter Wasserfestigkeit. Die erfindungsgemäßen Lackbindemittel sind beispielsweise sehr vorteilhaft in Spritzmattinen, Schnellschliffgrundierungen, Papierlacken und Korrosionsschutzlacken zu verwenden.

Die in den Beispielen angeführten Teile und Prozente bedeuten Gewichtsteile bzw. Gewichtsprozente.

Beispiel 1

Hartharz auf Basis der Umsetzung von Harnstoff mit Formaldehyd und Isobutyraldehyd im Molverhältnis 1:4:4.

In einem mit Kühler, Thermometer, Rührer und Tropftrichter ausgestatteten Kolben werden 750 Teile Formaldehyd 40 %ig, 720 Teile Isobutyraldehyd und 150 Teile Harnstoff gemischt und innerhalb von 10 Minuten mit 150 Teilen 75 %iger Schwefelsäure versetzt. Die Mischung wird auf 80°C aufgeheizt und 3 Stunden bei dieser Temperatur kondensiert. Anschließend fügt man 800 Teile Xylol hinzu, läßt 20 Minuten bei 75°C rühren und trennt nach Abschalten des Rührers die wäßrige Phase ab. Die Xylolphase wird durch azeotrope Destillation vom Restwasser befreit, mit 90 Teilen 30 %iger Natriummethylatlösung versetzt und 1 Stunde bei Rückflußtemperatur gerührt. Danach wird auf 70°C abgekühlt, mit 75 %iger Schwefelsäure neutralisiert und 2 mal mit je 500 Teilen Wasser gewaschen.

Nach Abtrennen des Waschwassers wird aus der Xylolphase bei ca. 26 mbar das Lösungsmittel bis zum Erreichen einer Sumpftemperatur von 175°C abdestilliert. Man erhält 865 Teile eines schwach gelb gefärbten Harzes mit einem Erweichungspunkt nach DIN 53 180 von 80 bis 82°C.

| | |
|---|---|
| Säurezahl DIN 53 401 | <10 |
| Farbzahl, 50 %ig in Xylol (DIN 53 403) | < 6 |
| Nichtflüchtige Bestandteile (2 Stunden 125°C) | >98% |

Das Harz ist in den gebräuchlichen Lösungsmitteln, wie z.B. Äthylalkohol, Butanol, Methyläthylketon, Äthylacetat, Butylacetat, Toluol, Xylol klar löslich und unbegrenzt verdünnbar. In Benzinkohlenwasserstoffen besteht eine Löslichkeit von ca. 1:1.

Dieses Harz ist mit folgenden Filmbildnern einwandfrei verträglich:

—Nitrocellulose
—Äthylcellulose
—Vinylchloridmischpolymerisate
—Chlorkautschuk

Das Harz ist sehr gut lichtbeständig und wird durch Säuren nicht verfärbt.

Beispiel 2

Harz auf Basis Harnstoff-Formaldehyd-2-Methylpentanal im Molverhältnis 1:4:4.

600 Teile Formaldehyd 40 %ig, 800 Teile 2-Methylpentanal und 120 Teile Harnstoff werden in einem wie in Beispiel 1 beschriebenen Rührkolben gemischt und innerhalb von ca. 10 Minuten mit 150 Teilen 75 %iger Schwefelsäure versetzt. Die Mischung wird auf 90°C aufgeheizt und 3 Stunden bei

dieser Temperatur gerührt. Anschließend fügt man 800 Teile Xylol hinzu, läßt 20 Minuten bei 80°C rühren und trennt nach Abschalten des Rührers die wäßrige Phase ab. Die org. Phase wird durch azeotrope Destillation im Vakuum vom Restwasser befreit, mit 90 Teilen 30 %igem Natriummethylat versetzt und 1 Stunde bei Siedetemperatur gerührt.

Danach wird auf 70°C abgekühlt, mit 75 %iger Schwefelsäure neutralisiert (pH 7) und 2 mal mit je 500 Teilen Wasser gewaschen.

Aus der xylolischen Lösung wird im Vakuum bis 175°C Sumpftemperatur Xylol abdestilliert. Als Rückstand erhält man 880 Teile eines hellen Weichharzes, das sich leicht in Alkohol, Essigester und Testbenzin löst.

Beispiel 3

Harz auf Basis Harnstoff-Formaldehyd-2-Phenylpropanal im Molverhältnis 1:4:4.

600 Teile Formaldehyd 40 %ig, 1 072 Teile 2-Phenylpropanal und 120 Teile Harnstoff werden in einer wie in Beispiel 1 beschriebenen Rührapparatur vorgelegt, mit 150 Teilen 75 %iger Schwefelsäure versetzt und auf 95°C aufgeheizt. Nach 3-stündigem Rühren bei 95°C fügt man 1 200 Teile Xylol hinzu, läßt 20 Minuten bei 80°C rühren und trennt nach Abschalten des Rührers die wäßrige Phase ab. Die Xylolphase wird durch azeotrope Destillation im Vakuum vom Restwasser befreit, mit 90 Teilen Natriummethylat 30 %ig versetzt und 1 Stunde bei Rückflußtemperatur gerührt.

Danach wird auf 70°C abgekühlt, mit ca. 18 Teilen 75 %iger Schwefelsäure neutral gestellt und 2 mal mit je 500 Teilen Wasser gewaschen.

Aus der Xylolphase wird im Vakuum das Lösungsmittel abdestilliert bis zum Erreichen einer Sumpftemperatur von 175°C.

Der verbleibende Harzrückstand (1 180 Teile) ist leicht löslich in Alkohol und Essigester und weist einen Erweichungspunkt nach KSN von 64°C auf.

Beispiel 4

Harz auf Basis Harnstoff-Formaldehyd-2-Methylpentanal im Molverhältnis 1:2:2

Eine Mischung aus 300 Teilen Formaldehyd 40 %ig, 400 Teilen 2-Methylpentanal und 120 Teilen Harnstoff wird in einer wie in Beispiel 1 beschriebenen Rührapparatur vorgelegt, mit 150 Teilen 75 %iger Schwefelsäure versetzt und 3 Stunden bei einer Temperatur von 90°C gerührt.

Anschließend fügt man 800 Teile Xylol hinzu, läßt kurze Zeit bei 80 bis 85°C rühren und trennt nach Abstellen des Rührers die wäßrige Phase ab. Die organische Phase wird durch azeotrope Destillation vom Restwasser befreit und nach Zusatz von 60 Teilen Natriummethylat 30 %ig 1 Stunde bei Rückflußtemperatur gerührt.

Danach wird die Reaktionslösung auf 70°C abgekühlt, mit 75 %iger Schwefelsäure neutralisiert (pH 7) und 2 mal mit je 500 Teilen Wasser gewaschen. Die xylolische Lösung wird im Vakuum bis zum Erreichen einer Sumpftemperatur von 175°C eingedampft.

Das zurückbleibende Harz (420 Teile) ist klar löslich in Alkohol und Testbenzin und weist einen Erweichungspunkt nach KSN von 101°C auf.

Beispiel 5

Harz auf Basis von Harnstoff-Formaldehyd und Isobutyraldehyd im Molverhältnis 1:3:3

562,5 Teile Formaldehyd 40 %ig, 540 Teile Isobutyraldehyd und 150 Teile Harnstoff werden in einer wie in Beispiel 1 beschriebenen Rührapparatur zusammengegeben, mit 150 Teilen 75 %iger Schwefelsäure versetzt und auf 80°C aufgeheizt. Es wird 3 Stunden bei 80°C kondensiert. Zur Reaktionsmischung gibt man sodann 800 Teile Xylol, läßt ca. 20 Minuten bei 70 bis 80°C rühren und trennt nach Abstellen des Rührers die wäßrige Phase ab. Nach Abdestillieren des im Xylol verbliebenen Restwasser fügt man 90 Teile 30 %ige Natriummethylatlösung hinzu und läßt 1 Stunde bei Siedetemperatur (103 bis 105°C) rühren. Anschließend wird auf 60°C abgekühlt, mit 75 %iger Schwefelsäure neutralisiert (pH 7) und mit 500 Teilen Wasser bei 80°C gewaschen. Aus der Xylolphase wird im Vakuum (33 mbar) das Lösungsmittel bis zum Erreichen einer Sumpftemperatur von 175°C abdestilliert.

Es werden 650 Teile eines schwach gelb gefärbten Hartharzes erhalten, das sich klar im Alkohol löst und einen Erweichungspunkt nach KSN von 94°C aufweist.

Beispiel 6

Eine Laborkaskade, bestehend aus drei nacheinander geschalteten 1 l-Kolben, die jeweils mit Rührer, Thermometer und Rückflußkühler ausgestattet sind, wird mittels Dosierpumpen mit 410 Teilen/h einer Mischung aus Harnstoff und Formaldehyd 40 %ig im Molverhältnis von 1:4, 328 Teilen/h Isobutyraldehyd und 60 Teilen/h 75 %iger Schwefelsäure beschickt. Im 1. Kolben wird die Temperatur bei 75 bis 80°C, im 2. und 3. Kolben jeweils bei 90°C gehalten.

Die Verweilzeit der Reaktionsmischung in der Kaskade beträgt ca. 4 Stunden.

Das im Verlauf von einer Stunde aus der Kaskade anfallende Reaktionsprodukt wird in 500 Teilen Xylol gelöst und nach Abtrennen der wäßrigen Phase durch azeotrope Destillation vom Restwasser befreit. Anschließend fügt man 50 Teile einer 30 %igen Natriummethylatlösung hinzu und läßt 1

Stunde bei Siedetemperatur rühren. Die Lösung wird danach auf ca. 70°C abgekühlt, mit 75 %iger Schwefelsäure neutralisiert (pH 7) und 2 mal mit je 500 Teilen Wasser bei 80°C gewaschen.

Die xylolische Lösung wird im Vakuum bis zum Erreichen einer Sumpftemperatur von 175°C eingedampft.

Als Rückstand erhält man 400 Teile eines hellen Hartharzes mit einem Erweichungspunkt nach KSN von 80 bis 82°C.

Beispiel 7

Anwendung des nach Beispiel 1 hergestellten Harzes:

a) Spritzmattine:

15 Teile Nitrocellulose Norm 24 E, 2/1 butanolfeucht
8 Teile Harz nach Beispiel 1
3 Teile Ricinusöl, geblasen
3 Teile Dioctylphthalat
3 Teile Äthylglykol
5 Teile Butylacetat
30 Teile Äthylacetat
5 Teile Butanol
20 Teile Äthylalkohol (Sprit)
10 Teile Toluol

Der Festgehalt beträgt 23%. Auslaufzeit DIN 4 mm=24 Sekunden.

Eigenschaften des Lackfilms:

Glanz gut
Vergilbung nach 15-stündiger Belichtung unter UV-Lampe: sehr gering
Wasserfestigkeit bei 24-stündiger Einwirkung: keine Fleckenbildung

b) Schnellschliffgrund:

42 Teile Nitrocellulose Norm 27 E, 25 %ig in Butylacetat gelöst
8,75 Teile Erdnußalkydharz, 70 %ig in Xylol
6,1 Teile Harz nach Beispiel 1
1,65 Teile Ricinusöl, geblasen
1,65 Teile Dibutylphthalat
1,65 Teile Zinkstearat
3 Teile Äthylglykol
4 Teile Isobutanol
3,2 Teile Isobutylstearat
12 Teile Toluol
10 Teile Xylol
6 Teile Isopropanol

Der Feststoffgehalt beträgt 27,5% und die Auslaufzeit DIN 4 mm liegt bei 25 Sekunden.

Der Lack wirde mittels einer Gießmaschine in einer Schichtdicke von 150 g/m² auf Holzplatten aufgegossen. Er war bei Raumtemperatur nach 2 Stunden sehr gut mit 320er Papier schleifbar.

Auf Macoréfurnieren wurde nach Auftrag in einer Schichtdicke von 100 g/m² nach 1 Minute Ablüften, 1 Minute 30°C, 5 Minuten 60 bis 70°C und 1 Minute Ablüften eine gute Stapelfähigkeit erzielt.

c) Papierlack:

15 Teile Nitrocellulose Norm 24 E, butanolfeucht
10 Teile Harz nach Beispiel 1
1 Teil Dioctylphthalat
2 Teile Dioctyladipat
1,5 Teile Polyvinyläthyläther, 70% in Äthylalkohol
70,5 Teile Lösungsmittel Äthylacetat+Sprit+Butylacetat (2:1:1)

Der Feststoffgehalt beträgt 24% und die Auslaufzeit DIN 4 mm liegt bei 23 Sekunden.

Der Lack zeichnet sich—auf Kunstdruckpapier aufgetragen—durch guten Glanz, hohe Elastizität und sehr gute Lichtbeständigkeit aus.

d) Korrosionsschutzlack:

80 Teile Vinylchlorid-Vinylisobutyläther-Mischpolymerisat
15 Teile Chlorparaffinweichmacher
33 Teile Harz nach Beispiel 1
200 Teile Xylol
60 Teile Eisenoxid rot 130 M
128 Teile Talkum, feinst
57 Teile Schwerspat, feinst gemahlen (z.B. EWO normal)
20 Teile Antiabsetzpaste auf Basis Kieselgel.

Die Pigmentvolumenkonzentration beträgt 40%. Der Lack wurde auf sandgestrahlten Eisenblechen aufgespritzt und brachte im Schwitzwassertest guts Resultate.

**Patentansprüche**

1. Verfahren zur Herstellung von Weich- und Hartharzen durch Umsetzung
(a) eines Harnstoffs der allgemeinen Formal (I) oder (II)

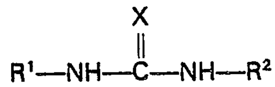 (I)

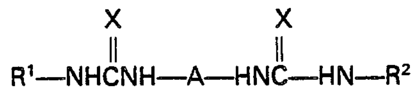 (II)

worin $R^1$ und $R^2$ Wasserstoff oder gleiche oder verschiedene Alkylreste, A einen Alkylenrest und X Sauerstoff oder Schwefel bedeuten, mit
(b) Formaldehyd und
(c) einem CH-aciden Aldehyd der allgemeinen Formel (III)

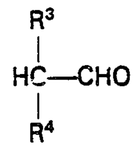

worin die Reste $R^3$ und $R^4$ gleiche oder verschiedene Alkyl-, Aryl- oder Alkylarylreste bedeuten,
im Temperaturbereich zwischen 60 und 150°C in Gegenwart von Säruen, gegebenenfalls in Gegenwart von Lösungs- und/oder Verdünnungsmittel, dadurch gekennzeichnet, daß man anschließend in wasserfreiem Medium mit 2 bis 5 Gew.-%, bezogen auf Festharz, eines Alkalialkoholats nachbehandelt und danach mit einer anorganischen oder organischen Säure neutralisiert, das Salz mit Wasser auswäscht und das in der organischen Lösungsmittelphase gelöste Harz vom Lösungsmittel durch Destillation befreit.

2. Verfahren nach Anspruch 1, dadurch gekennzeichnet, daß Harnstoffe der allgemeinen Formel (I) oder (II) verwendet werden, worin $R^1$ und $R^2$ Wasserstoff oder gleiche oder verschiedene Alkylreste mit 1 bis 18 Kohlenstoffatomen und A einen Alkylenrest mit 1 bis 6 Kohlenstoffatomen bedeuten.

3. Verfahren nach Anspruch 2, dadurch gekennzeichnet, daß $R^1$ und $R^2$ Wasserstoff oder gleiche oder verschiedene Alkylreste mit 1 bis 5 Kohlenstoffatomen und A einen Alkylenrest mit 1 bis 3 Kohlenstoffatomen bedeuten.

4. Verfahren nach einem der vorhergehenden Ansprüche, dadurch gekennzeichnet, daß $R^3$ und $R^4$ in der allgemeinen Formel (III) des CH-aciden Aldehyds gleiche oder verschiedene 1 bis 8 Kohlenstoffatome enthaltende Alkylreste oder 6 bis 10 Kohlenstoffatome enthaltende Aryloder Alkylarylreste bedeuten.

5. Verfahren nach Anspruch 4, dadurch gekennzeichnet, daß als CH-acide Aldehyde mindestens einer aus der Gruppe Isobutyraldehyd, 2-Äthylhexanal, 2-Methylpentanal, 2-Phenylpropanal und Isovaleraldehyd verwendet wird.

6. Verfahren nach einem der vorhergehenden Ansprüche, dadurch gekennzeichnet, daß Harnstoff, Formaldehyd und CH-acider Aldehyd in einem Molverhältnis von 1:2:2 bis 1:4:4 eingesetzt werden.

7. Verfahren nach einem der vorhergehenden Ansprüche, dadurch gekennzeichnet, daß als Alkalialkoholat für die Nachbehandlung Natriummethylat oder Natriumäthylat verwendet wird.

8. Verfahren nach einem der vorhergehenden Ansprüche, dadurch gekennzeichnet, daß die Nachbehandlung mit Alkalialkoholat bei 80 bis 120°C durchgeführt wird.

9. Verfahren nach einem der vorhergehenden Ansprüche, dadurch gekennzeichnet, daß die Umsetzung in aromatischen Kohlenwasserstoffen durchgeführt wird.

10. Verwendung der nach einem Verfahren gemäß einem der vorhergehenden Ansprüche hergestellten Weich- und Hartharze in Kombination mit anderen Filmbildnern als Lackbindemittel.

**Claims**

1. A process for the preparation of soft and hard resins by reacting
a) a urea of the general formula (I) or (II)

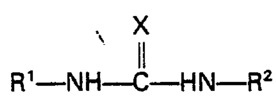 (I)

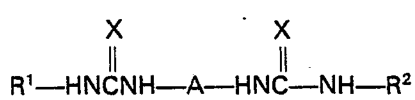 (II)

where $R^1$ and $R^2$ are hydrogen or identical or different alkyls, A is alkylene and X is oxygen or sulphur, with

b) formaldehyde and

c) a CH-acidic aldehyde of the general formula (III)

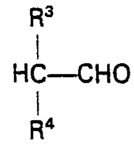

where $R^3$ and $R^4$ are identical or different alkyls, aryls or alkylaryls, at from 60 to 150°C, in the presence of an acid and in the presence or absence of a solvent and/or diluent, characterized in that aftertreatment is then carried out with 2 to 5% by weight, based on solid resin, of an alkali metal alcoholate in an anhydrous medium, followed by neutralization with an inorganic or organic acid, the salt is washed out with water, and the resin dissolved in the organic solvent phase is freed from solvent by distillation.

2. A process as claimed in claim 1, characterised in that a urea of the general formula (I) or (II) is used, where $R^1$ and $R^2$ are hydrogen or identical or different alkyls of 1 to 18 carbon atoms, and A is alkylene of 1 to 6 carbon atoms.

3. A process as claimed in claim 2, characterized in that $R^1$ and $R^2$ are hydrogen or identical or different alkyls of 1 to 5 carbon atoms, and A is alkylene of 1 to 3 carbon atoms.

4. A process as claimed in any of the preceding claims, characterized in that $R^3$ and $R^4$ in the general formula (III) of the CH-acidic aldehyde are identical or different alkyls of 1 to 8 carbon atoms or aryls or alkylaryls of 6 to 10 carbon atoms.

5. A process as claimed in claim 4, characterized in that at least one compound selected from the group comprising isobutyraldehyde, 2-ethylhexanal, 2-methylpentanal, 2-phenylpropanal and isovaleraldehyde is employed as the CH-acidic aldehyde.

6. A process as claimed in any of the preceding claims, characterized in that the urea, formaldehyde and CH-acidic aldehyde are employed in a molar ratio of from 1:2:2 to 1:4:4.

7. A process as claimed in any of the preceding claims, characterized in that sodium methylate or sodium ethylate is used as the alkali metal alcoholate for the aftertreatment.

8. A process as claimed in any of the preceding claims, characterized in that the aftertreatment with an alkali metal alcoholate is carried out at from 80° to 120°C.

9. A process as claimed in any of the preceding claims, characterized in that the reaction is carried out in an aromatic hydrocarbon.

10. Use of the soft and hard resins prepared by a process as claimed in any of the preceding claims, in combination with other film-forming agents, as surface-coating binders.

**Revendications**

1. Procédé de préparation de résines molles et de résines dures par la réaction de

(a) une urée de l-une des formules générales (I) et (II)

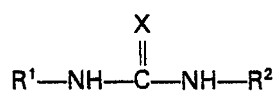

(I)

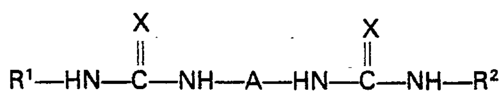

(II)

dans lesquelles $R^1$ et $R^2$ désignent des atomes d'hydrogène ou des radicaux alcoyle identiques ou différents, A représente une groupe alcoylène et X un atome d'oxygène ou de soufre, avec

(b) le formaldéhyde et

(c) un aldéhyde à groupe CH-acide de la formule générale (III)

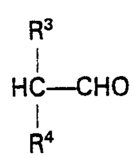

(III)

dans laquelle $R^3$ et $R^4$ désignent des radicaux alcoyle, aryle ou alcoyl-aryle identiques ou différents, dans la gamme de températures de 60 à 150°C en présence d'acides, éventuellement dans un solvant

et(ou) diluant, caractérisé en ce que l'on traite le produit réactionnel obtenu, dans un milieu exempt d'eau, avec 2 à 5% du poids de la résine solide d'un alcoolate de métal alcalin, on le neutralise ensuite par un acide minéral ou organique, on élimine le sel par une lixiviation à l'eau, puis on sépare la résine dissoute dans la phase de solvant organique de ce solvant par une distillation.

2. Procédé suivant la revendication 1, caractérisé en ce que l'on emploie des urées de l'une des formules générales (I) et (II), pour lesquelles $R^1$ et $R^2$ désignent des atomes d'hydrogène ou des radicaux alcoyle identiques ou différents en $C_1$ à $C_{18}$ et A représente un groupe alcoylène en $C_1$ à $C_6$.

3. Procédé suivant la revendication 2, caractérisé en ce que $R^1$ et $R^2$ désignent des atomes d'hydrogène ou des radicaux alcoyle identiques ou différents en $C_1$ à $C_5$ et A représente un groupe alcoylène en $C_1$ à $C_3$.

4. Procédé suivant l'une des revendications précédentes, caractérisé en ce que, dans la formule générale (III) de l'aldéhyde à groupe CH-acide, $R^3$ et $R^4$ représentent des radicaux alcoyle en $C_1$ à $C_8$ ou des groups aryle ou alcoyle-aryle en $C_6$ à $C_{10}$ identiques ou différents.

5. Procédé suivant la revendication 4, caractérisé en ce que l'aldéhyde à groupe CH-acide est choisi parmi l'aldéhyde isobutyrique, l'éthyl-2 hexanal, le méthyl-2 pentanal, le phényl-2 propanal et l'aldéhyde isovalérique ou un mélange de ceux-ci.

6. Procédé suivant l'une des revendications précédentes, caractérisé en ce que l'on emploie l'urée, le formaldéhyde et l'aldéhyde à groupe CH-acide dans des rapports molaires compris entre 1:2:2 et 1:4:4.

7. Procédé suivant l'une des revendications précédentes, caractérisé en ce que l'alcoolate de métal alcalin pour le post-traitement est le méthylate de sodium ou l'éthylate de sodium.

8. Procédé suivant l'une des revendications précédentes, caractérisé en ce que le post-traitement par l'alcoolate de métal alcalin est effectué entre 80 et 120°C.

9. Procédé suivant l'une des revendications précédentes, caractérisé en ce que la réaction est réalisée dans des hydrocarbures aromatiques.

10. Utilisation des résines molles et des résines dures, préparées suivant l'une des revendications précédentes, en combinaison avec d'autres substances filmogènes comme liants pour vernis.